# EUROPÄISCHE PATENTSCHRIFT

(11) **EP 0 557 767 B1**
(45) Veröffentlichungstag und Bekanntmachung des Hinweises auf die Patenterteilung: **28.06.1995**
(21) Anmeldenummer: 93101891.5
(22) Anmeldetag: 06.02.1993
(51) Int. Cl.: B62D 1/18

(54) **Verstellbare Lenksäule für Kraftfahrzeuge**
Adjustable steering column for motor vehicles
Colonne de direction ajustable pour véhicules à moteur

(30) Priorität: 28.02.1992 DE 4206177
(43) Veröffentlichungstag der Anmeldung: 01.09.1993
(73) Patentinhaber: LEMFOERDER METALLWAREN AG., D-49441 Lemförde (DE)
(72) Erfinder: Ersoy, Metin, Dr.-Ing., W-6229 Walluf (DE)
(74) Vertreter: Bruse, Willy Hans Heinrich

(56) Entgegenhaltungen:
- DE-A- 3 433 936
- DE-C- 3 603 173
- FR-A- 2 392 861
- GB-A- 2 113 629
- US-A- 4 733 575
- US-A- 4 998 999

## Beschreibung

Die Erfindung betrifft eine verstellbare Lenksäule für Kraftfahrzeuge nach dem Oberbegriff des Patentanspruches 1.

Eine solche Lenksäule ist aus der GB-2113629-A bekannt. Durch diese Druckschrift wird eine verstellbare Lenksäule für Kraftfahrzeuge offenbart, bei der der in dem an der Karosserie festen Halteteil vorgesehene Schlitz mit seiner Längsrichtung unter einem Winkel von weniger als 90° gegenüber der Längsrichtung des Schlitzes in dem am Mantelrohr festen Teil angeordnet ist. Diese Druckschrift offenbart einen Vorschlag für die Erhöhung der Haltekraft. Das Lenkrad ist sowohl in der Höhe als auch in der Längsrichtung der Längsachse verstellbar. Der Kippunkt der Lenksäule bei der Höhenverstellung liegt am unteren Ende der in dem Mantelrohr drehbar und axial festgelegt gelagerten Lenkwelle.

Zur Sicherung der eingestellten Lenkradposition sind bei einer anderen bekannten Anordnung nach der DE 39 20 783 -C2- an dem Mantelrohr zwei Bleche mit einem in Richtung der Lenksäulenachse verlaufenden Führungsschlitz versehen, wobei die Bleche jeweils an einer Wand eines an der Karosserie festen Halteteils anliegen, welches in den beiden Wänden ebenfalls einen Führungsschlitz aufweist, dessen Längsrichtung jedoch senkrecht zur Längsrichtung der Führungsschlitze in den Blechen am Mantelrohr verläuft, so daß letzteres sowohl in Längsrichtung als auch quer dazu verstellbar ist. Der Klemmechanismus zur Verriegelung der eingestellten Position besteht aus betätigbaren Schraubteilen, die mit einem Rechts- und Linksgewinde ineinanderschraubbar sind, um die am Mantelrohr festen Bleche und die Wände des Halteteils an der Karosserie reibschlüssig haftend zusammenzupressen. Bei einem Frontaufprall des Fahrzeugs wirken sehr große, aus dem Körpergewicht des Fahrzeuglenkers und dem Gewicht des Lenksäulenkopfes herrührende Kräfte auf diese Reibverbindung, so daß es selbst bei sehr aufwendig gestalteten Klemmechanismen zum Durchrutschen kommt, wenn große Kräfte auf den Klemmechanismus einwirken. Auf Reibschluß basierende Klemmechanismen werden daher vielfach als nicht tauglich für mit einem Aufprallgassack ausgerüstete Kraftfahrzeuge angesehen. Zur Vermeidung dieses Nachteils eingesetzte Klemmvorrichtungen mit Formschluß zwischen den miteinander zu verriegelnden Teilen sind sehr kostenaufwendig und ermöglichen keine stufenlose Verstellung der Lenkradposition.

Aufgabe der Erfindung ist es daher, eine die stufenlose Lenkradverstellung ermöglichende Reibschlußklemmung zwischen dem Mantelrohr und dem karosseriefesten Halteteil in der eingestellten Position des Lenkrades in der Wirkung zu verbessern, daß die in der Wirkungsrichtung des aus dem Gewicht des Fahrzeuglenkers bei einem Frontaufprall herrührenden Kräfte in dem Klemmechanismus weitestgehend formschlüssig übertragen werden.

Diese Aufgabe löst die Erfindung durch eine Ausbildung mit Merkmalen nach dem Kennzeichen des Patentanspruches 1.

Bei der erfindungsgemäßen Anordnung ist der eine, in dem karosseriefesten Halteteil ausgebildete Schlitz nicht mehr senkrecht zu dem anderen, in einem Teil am Mantelrohr parallel zur Längsachse der Lenksäule ausgebildeten Schlitz angeordnet, sondern unter einer Neigung in Anpassung an die Neigung der Lenksäule. Bei Personenkraftwagen ist die Lenksäule im allgemeinen etwa unter einem Winkel von 20° zur Horizontalen geneigt angeordnet, so daß der Schlitz in dem karosseriefesten Halteteil mit seiner Längsrichtung einen Winkel mit der Längsrichtung des Schlitzes am Mantelrohr einschließt, der dem Ergänzungswinkel zu 90° entspricht. In der praktischen Ausführung liegt die Längsachse des Schlitzes in dem Halteteil etwa senkrecht und somit quer zur horizontalen Wirkungsrichtung der auf den Klemmechanismus bei einem Frontaufprall einwirkenden, aus dem Körpergewicht des Fahrzeuglenkers herrührenden Kräfte. Dies bedeutet zwar, daß eine Höhenverstellung des Lenkrades zwangsläufig auch eine Längenverstellung erfordert, jedoch ist diese Auswirkung sehr klein. Vorteilhaft ist jedoch die Beibehaltung der Klemmung für beide Verstellwege durch ein einziges Organ, zum Beispiel einen verschwenkbaren Hebel auf einer Gewindemuffe oder dergleichen.

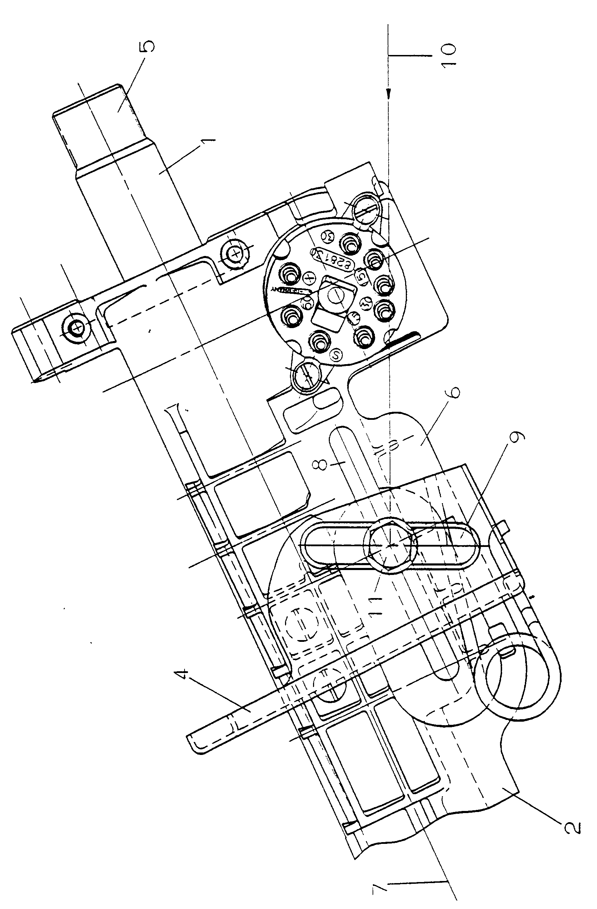

Ein Ausführungsbeispiel der Erfindung ist auf der Zeichnung dargestellt.

Die Zeichnung zeigt das obere Ende einer verstellbaren Lenksäule und deren Befestigung an der Karosserie. Die aus mehreren, teleskopierbaren Teilen bestehende Lenkwelle 1 ist in einem Mantelrohr 2 drehbar und mit diesem Mantelrohr gemeinsam axial verschieblich in einem an der Karosserie des Fahrzeuges festen Halteteil 4 gelagert. Auf dem oberen Gewindeende 5 der Lenksäule 1 wird das nicht dargestellte Lenkrad befestigt. In einem sich radial und über eine gewisse Länge auch axial ausdehnende Teil 6 des Mantelrohres 2 ist parallel zur Längsachse 7 der Lenksäule ein Führungsschlitz 8 angeordnet. Im Bereich dieses Führungsschlitzes 8 ist das Mantelrohr 2 in dem Halteteil 4 abgestützt, welches seinerseits fest mit der Karosserie des Fahrzeugs verbunden ist. In diesem Halteteil 4 befindet sich ebenfalls ein Schlitz 9, der sich mit seiner Längsrichtung quer zur Wirkungsrichtung 10 der bei einem Frontaufprall des Fahrzeugs aus dem Körpergewicht des Fahrzeuglenkers herrührenden Kräfte erstreckt. Beide Schlitze 8 und 9 durchsetzt eine Klemmschraube 11 mit einem auf der Zeichnung nicht dargestellten Betätigungsorgan, so daß das Teil 6 am Mantelrohr 2 und das Halteteil 4 durch die Klemmschraube 11 fest zusammengepreßt werden können. Dazu sind sowohl an dem Teil 6 des Mantelrohres 2 als auch an der Innenseite des Halteteiles 4 in gegenseitiger Berührung befindliche Reibflächen ausgebildet, wie es an sich auch bei anderen Ausführungen bekannt ist. Ein solcher Klemmechanismus ist vorteilhaft beiderseits der lotrechten Ebene durch die Längsachse 7 der Lenksäule mit einem gewissen Abstand von dieser Ebene vorgesehen. In der Zeichnung wird der angestrebte Vorteil deutlich, daß die auf den Klemmechanismus in Richtung der Linie 10 wirksamen Kräfte formschlüssig vom Mantelrohr 2 auf das an der Karosserie feste Halteteil 4 übertragen werden, so daß der Klemmechanismus gegenüber herkömmlichen Anordnungen weniger belastet wird und auch im Crash-Falle große Kräfte übertragen werden, wie es beispielsweise gefordert wird, wenn ein Fahrzeug mit einem Aufprallgassack ausgestattet ist.

### BEZUGSZEICHENLISTE:

- 1: Lenkwelle
- 2: Mantelrohr
- 4: Halteteil
- 5: Gewindezapfen
- 6: Teil am Mantelrohr
- 7: Längsachse der Lenksäule
- 8: Längsschlitz
- 9: Längsschlitz
- 10: Wirkungsrichtung
- 11: Klemmschraube

## Patentansprüche

1. Verstellbare Lenksäule für Kraftfahrzeuge, bei der ein die teleskopierbare Lenkwelle aufnehmendes Mantelrohr (2) in der eingestellten Position des Lenkrades reibschlüssig mit einem an der Karosserie festen Halteteil (4) verriegelbar ist und bei der einerseits in einem an dem Mantelrohr (2) festen Teil (6) und andererseits in dem Halteteil (4) in einer sich kreuzenden Anordnung jeweils wenigstens ein Führungsschlitz (8,9) ausgebildet ist, den eine mit einem betätigbaren Klemmechanismus verbundene Klemmschraube (11) für das reibschlüssige Zusammenpressen der beiden einen Führungsschlitz aufweisenden Elemente durchgreift, wobei der in dem an der Karosserie festen Halteteil (4) vorgesehene Schlitz (9) mit seiner Längsrichtung unter einem Winkel von weniger als 90° gegenüber der Längsrichtung des Schlitzes (8) in dem am Mantelrohr (2) festen Teil (6) angeordnet ist, dadurch gekennzeichnet, daß die Längsrichtung des Schlitzes (9) in dem Halteteil (4) quer zur Wirkungsrichtung (10) der bei einem Aufprall der Fahrzeugvorderseite aus dem Körpergewicht des Fahrzeuglenkers herrührenden Kraft etwa in der Vertikalen verläuft und mit der parallel zur Lenksäulenachse (7) verlaufenden Längsrichtung des Schlitzes (8) in dem Teil (6) an dem Mantelrohr (2) bei einer Neigung der Lenksäulenachse (7) von etwa 20° gegenüber der Horizontalen einen Winkel von 70° einschließt.

## Claims

1. Adjustable steering column for motor vehicles, in which a steering column tube (2) holding the telescopic steering shaft can be frictionally locked with a holding part (4), which is rigid with the body, in the set position of the steering wheel, and in which at least one respective guide slot (8, 9) is formed on the one hand in a part (6), which is rigid with the steering column tube (2), and on the other in the holding part (4) in an intersecting arrangement, through which slots a clamping screw (11), which is connected to an actuatable clamping mechanism, passes to frictionally press together the two components comprising a guide slot, the slot (9) provided in the holding part (4) rigid with the body being disposed with its longitudinal direction at an angle of less than 90° with respect to the longitudinal direction of the slot (8) in the part (6) rigid with the steering column tube (2), characterised in that the longitudinal direction of the slot (9) in the holding part (4) extends approximately vertically transversely to the direction of action (10) of the force arising from the bodily weight of the vehicle's driver when the front of the vehicle is involved in a collision and forms an angle of 70° with the longitudinal direction, which extends parallel to the steering column axis (7), of the slot (8) in the part (6) at the steering column tube (2) when the steering column axis (7) is inclined by approximately 20° with respect to the horizontal.

## Revendications

1. Colonne de direction réglable pour véhicules automobiles, dans laquelle un tube enveloppe (2) recevant un arbre de direction télescopique peut être bloqué sur un élément de support (4) solidaire de la carrosserie, par liaison par friction, dans la position de réglage du volant de direction, et dans laquelle au moins une fente de guidage (8, 9) est réalisée respectivement dans une pièce (6) solidaire du tube enveloppe (2), d'un côté, et dans l'élément de support (4) de l'autre, selon une disposition en croix, les fentes étant traversées par une vis de serrage (11) reliée à un mécanisme de serrage pouvant être actionné, la vis étant destinée à produire le serrage assurant une liaison par friction des deux éléments comportant une fente de guidage l'un sur l'autre, la fente (9) prévue dans l'élément de support (4) solidaire de la carrosserie étant disposée de manière que son extension longitudinale forme un angle de moins de 90° par rapport à l'extension longitudinale de la fente (8) ménagée dans la pièce (6) solidaire du tube enveloppe (2), caractérisée en ce que la direction longitudinale de la fente (9) ménagée dans l'élément de support (4) s'étend à peu près verticalement et transversalement à la direction d'action (10) de la force résultant du poids du corps du conducteur du véhicule lors d'une collision de la face frontale du véhicule, et délimite avec la direction longitudinale de la fente (8) ménagée dans la pièce (6) située sur le tube enveloppe (2), s'étendant parallèlement à l'axe (7) de la colonne de direction, un angle de l'ordre de 70° si l'axe (7) de la colonne de direction présente un angle de l'ordre de 20° par rapport à l'horizontale.
